(19)

Europäisches Patentamt

European Patent Office

Office européen des brevets

(11) **EP 1 209 212 B1**

(12) **EUROPEAN PATENT SPECIFICATION**

(45) Date of publication and mention of the grant of the patent:
**14.11.2007 Bulletin 2007/46**

(21) Application number: **00954979.1**

(22) Date of filing: **24.08.2000**

(51) Int Cl.:
*C09J 201/00* (2006.01)   *C09J 4/06* (2006.01)
*C09J 171/02* (2006.01)   *C09J 5/00* (2006.01)
*C09J 201/10* (2006.01)   *C08J 3/28* (2006.01)
*C08L 101/10* (2006.01)

(86) International application number:
**PCT/JP2000/005694**

(87) International publication number:
**WO 2001/016248 (08.03.2001 Gazette 2001/10)**

(54) **ADHESIVE COMPOSITION AND METHOD OF BONDING WITH THE ADHESIVE COMPOSITION**

KLEBSTOFFZUSAMMENSETZUNG UND VERFAHREN ZUM VERKLEBEN MIT DIESER ZUSAMMENSETZUNG

COMPOSITION D'ADHESIF ET PROCEDE DE LIAISON A L'AIDE DE LA COMPOSITION D'ADHESIF

(84) Designated Contracting States:
**DE FR GB IT**

(30) Priority: **27.08.1999 JP 24159999**

(43) Date of publication of application:
**29.05.2002 Bulletin 2002/22**

(73) Proprietor: **SEKISUI CHEMICAL CO., LTD.**
**Osaka-shi,**
**Osaka 530-8565 (JP)**

(72) Inventors:
• **Kuroda, Takeo,**
**Sekisui Chemical Co., Ltd.**
**Mishima-gun,**
**Osaka 618-8589 (JP)**
• **Fukui, Hiroji,**
**Sekisui Chemical Co., Ltd.**
**Mishima-gun,**
**Osaka 618-8589 (JP)**
• **Ishizawa, Hideaki,**
**Sekisui Chemical Co., Ltd.**
**Mishima-gun,**
**Osaka 618-8589 (JP)**

(74) Representative: **TER MEER - STEINMEISTER & PARTNER GbR**
**Patentanwälte**
**Mauerkircherstrasse 45**
**81679 München (DE)**

(56) References cited:
EP-A1- 0 035 049     WO-A-95/26385
GB-A- 1 304 112      JP-A- 3 160 053
JP-A- 6 080 825      JP-A- 6 228 248
JP-A- 8 325 466      JP-A- 9 137 137
JP-A- 2000 044 923   JP-A- 2000 273 418

**Description**

**TECHNICAL FIELD**

This invention relates to an adhesive composition which is flowable in ordinary state, shows a spreadable viscosity, provides temporary bonding or fixing when its cohesion is improved by short-time exposure to an active energy radiation, and reaches a final bonding power when subjected to crosslinking or polymerization, and also to a joining method utilizing the adhesive composition.

**BACKGROUND ART**

In recent years, adhesives have come into wide-spread use in the fields of architecture and building materials for their superior productivity and workability. With the development of factory-produced housing or the like, there is an increasing need for adhesives which suit high-speed production of building components on assembly lines.

In Japanese Patent Laying-Open No. Sho 56-67366, an adhesive composition is proposed which contains a compound having a hydrolyzable silyl group such as an alkoxysilyl and cures in the presence of moisture or the like. This adhesive composition exhibits superior impact resistance and creep resistance after it has been cured. Accordingly, its use at parts (e.g., joints between tiles or wall members) of a house that receive continuous loads has been investigated and actually practiced in building and construction sites.

However, due to the tendency to cure in the presence of moisture in the air, this adhesive composition, if designed to have a fast-curing property adapted for use on such an assembly line, has a shorter pot life and is thus prevented from residing on an applicator for extended period of time, which has been a problem. On the other hand, if a design is made to extend a pot life of the composition, curing thereof is retarded. In such a case, an appropriate measure must be taken to hold components in positions. In addition, the composition must be aged until it completes curing.

In the meantime, photocurable compositions have been conventionally proposed (for example, in Japanese Patent Laying-Open No. Sho 63-139969) which are caused to cure by short-time exposure to a radiation. The application of such photocurable compositions to photo-curable inks, varnishes, coating materials or adhesives has also been proposed. Since photocurable adhesives incorporating such photocurable compositions show fast-curing properties, a sufficiently long pot life can be insured simply by shielding a light that otherwise sensitizes them. Accordingly, the use as inline adhesives has been proposed. However, the photocurable adhesives are generally irradiated after application thereof and following combination of adherends. This has prevented application of such photocurable adhesives to building and construction materials through which substantially no light can pass.

Also, curable compositions containing, in combination, a compound containing the aforementioned hydrolyzable silyl group and a photocurable substance have been proposed (for example, in Japanese Patent Laying-Open Nos. Sho 55-36241 and Hei 8-325466) for the purposes of improving stain resistance, dust resistance, tack and weather resistance of cured surfaces when they are used as building sealants. It has been however difficult to rapidly develop fast-curing and cohesive properties by short-time irradiation.

This invention is directed toward solving the above-described problems and its object is to provide an adhesive composition which is flowable in ordinary state, has a spreadable viscosity, has a long pot life, develops cohesion by short-time irradiation, eliminates the need of temporary bonding and fixing procedures and exhibits superior impact resistance, creep resistance and other properties after it has been cured, and a joining method utilizing the adhesive composition.

Reference is also made to the following documents:

JP-A-6080825 relates to ultraviolet-curable and moisture-curable resin compositions being composed of (A) a reaction product of (1) a polybutadiene diol compound esterified its both terminals with maleic anhydride with (2) an epoxysilane coupling agent, (B) an alkoxysilyl compound containing a vinyl group, (C) a photo-polymerization initiator and (D) a moisture-curing catalyst.

JP-A-6228248 relates to the production of reinforced rubber elastic body useful for adhesion or sealing in a simple process, wherein to (A) an elastic polymer having a polyether chain as a main chain and two hydrolyzable silicon functional groups at molecular chain ends are added (B) a compound having a compatibility with the elastic polymer and containing a photopolymerizable ethylenically unsaturated group, (C) a photopolymerization catalyst and (D) a hydrolysis condensation catalyst.

JP-A-9137137 relates to an acrylic tacky adhesive tape being obtained by coating at least one side of a substrate with a composition comprising a photopolymerizable monomer mixture comprising an alkyl (meth)acrylate, a carboxylated vinyl monomer, and a photopolymerisation initiator as well as cross-linking monomer followed by the photopolymerisation of the composition.

JP-A-3160053 relates to a room temperature-curable composition comprising a polyether containing at least one reactive silicon function group, a photocurable substance and an unsaturated compound reactive with oxygen.

JP-A-8325466 relates to an improved curable composition being obtained by incorporating photocurable compound having a photocurable unsaturated group and a urethane bond into an organic polymer having a reactive silyl group crosslinkable upon hydrolysis.

## DISCLOSURE OF THE INVENTION

A reference aspect of the invention of this application is an adhesive composition characterized as containing a compound (X) having a crosslinkable or polymerizable group and a compound (Y) which is activated when exposed to an active energy radiation to generate species that cause crosslinking or polymerization of at least a part of the compound (X), wherein the composition has a viscosity at 25 °C of 1 - 10,000,000 cps, a conversion of the compound (X) immediately after exposure of the adhesive composition to the active energy radiation does not exceed 70 %, a conversion of the compound (X) after exposure of the adhesive composition to the active energy radiation and subsequent 24-hour aging at 25°C is within the range of 50 - 100 %, and after exposure to the active energy radiation and following 24-hour aging at 25 °C, the cured composition has an elongation at break of 10 - 1,000 % and a dynamic tensile modulus in the range of $10^5$ - $10^9$ Pa.

Prior to exposure to the active energy radiation, the adhesive composition in accordance with the reference aspect of the invention is stored under a light-shielded or dehumidified condition so that crosslinking or polymerization of the compound (X) is prevented. That is, the compound (X) undergoes little change to show suitable flowability in ordinary state. This eases application of the composition onto various types of adherends by hands or spreaders conventionally known in the art.

The compound (Y) undergoes rapid decomposition upon exposure to the active energy radiation. However, either a part or whole of the compound (X) is left unreacted within a normal operation time to combine adherends. This allows the adhesive composition to develop cohesion commensurate with the properties and conversion of the compound (X) and reach a sufficient adhesive level to provide temporary fixing, making it suitable for use in adhesively joining various adherends.

Even after exposure to the active energy radiation, a crosslinking or polymerization reaction is still allowed to proceed in the form of a dark reaction. This is accompanied by rapid reduction in residual content of the compound (X) and thus rapid cure of the composition.

It is preferred that a conversion of the compound (X) immediately after exposure of the adhesive composition to the active energy radiation is in the range of 10 - 70 % and the adhesive composition immediately after its exposure to the active energy radiation exhibits a dynamic tensile modulus in the range of $10^5$ - $10^7$ Pa. Accordingly, the highly elastic cured composition is obtained when the substantial absence of the compound (X) is established after exposure of the composition to the active energy radiation.

It is also preferred that the compound (X) immediately after exposure of the adhesive composition to the active energy radiation exhibits a conversion of not exceeding 30 %, the composition has a viscosity at 25 °C in the range of 1 - 10,000,000 cps, and the compound (X) after exposure of the adhesive composition to the active energy radiation and following 12-hour aging thereof at 25 °C exhibits a conversion in the range of 50 - 100 %. In this case, the flowability is sustained over a certain time after exposure of the composition to the active energy radiation. This accordingly results in the provision of the adhesive composition excellent in wettability with respect to rough surfaces. This adhesive composition is thus made suitable for use in adhesively joining adherends such as mortar and plywood.

The dynamic shear modulus and dynamic tensile modulus, as defined in this specification, were determined by using a viscoelastic spectrometer at a measurement temperature of 25 °C. The dynamic shear modulus values were determined at an applied frequency of 0.1 rad/s. The dynamic tensile modulus values were determined at an applied frequency of 63 rad/s. A tensile tester with a crosshead speed of 500 mm/min was utilized to determine values for elongation at break at a temperature of 25 °C according to JIS K 6301.

Besides the aforementioned compounds (X) and (Y), the adhesive composition in accordance with this invention may further contain other components. An adhesive composition in accordance with the below-described second invention is such an adhesive composition that contains the compound (X), the compound (Y) and additional components.

The adhesive composition in accordance with the invention is as specified in claim 1. That is, the compound (A) and the compound (C) for use in the invention, in combination, correspond to the compound (X) for use in the reference aspect of the invention, and the compound (D) does to the compound (Y) for use in the reference aspect of the invention. The compound (B) is a catalyst that promotes crosslinking of the compound (A) in the presence of moisture.

In addition to containing the adhesive composition in accordance with the reference aspect of the invention, the adhesive composition in accordance with the invention further contains the compound (B) serving as a catalyst to promote crosslinking of the compound (A), and the thixotropic agent (E).

In the adhesive composition in accordance with the invention, it is preferred that the hydrolyzable silyl group in the compound (A) is an alkoxysilyl group and the compound (A) is a compound containing the alkoxysilyl group substituted in a polymer selected from polyalkylene glycol and polyolefin.

In the adhesive composition in accordance with the invention, it is preferred that the polymerizable group in the compound (C) is a free-radically polymerizable group and the compound (D) is a photochemically free-radical generating agent. In a more limited aspect of the invention, the polymerizable group in the compound (C) is an acryloyl or methacryloyl group.

In a further limited aspect of the invention, the compound (C) includes at least one type of polymerizable compound (F) containing one or more polymerizable groups in a molecule and having a weight average molecular weight of not less than 3,000. The use of the compound (F) for a part of the compound (F) increases an initial creep resistance of the adhesive composition immediately after combination of adherends.

In another particular aspect of the adhesive composition in accordance with the invention, the thixotropic agent (E) is at least one selected from the group consisting of glass balloons, glass beads, surface-treated calcium carbonates and silicas.

The method of joining members in accordance with the present invention is as specified in claim 7.

The present invention is now described in detail.

(Reference aspect)

In the reference aspect of the invention, the type of the crosslinkable or polymerizable group incorporated in the compound (X) is not particularly specified. Examples of such groups include hydrolyzable silyl groups such as alkoxysilyl, acetoxysilyl, chlorosilyl and bromosilyl groups; oxirane groups such as epoxy and oxetanyl groups; isocyanate groups; polymerizable unsaturated groups such as acryloyl, methacryloyl, styryl, allyl, vinyloxy, vinyloxycarbonyl, maleimide and unsaturated acid anhydride groups; and the like. The compound (X) may contain one or more of the above-listed groups in a molecule and such compounds may be used in combination.

Specific examples of compounds (X) include below-listed compounds (A), compounds (C) and compounds containing one or more isocyanate groups in a molecule. Examples of aromatic monofunctional isocyanates include phenyl isocyanate, naphthyl isocyanate, 2,4-dimethoxydiphenyl isocyanate, 2,6-dimethylphenyl isocyanate, 3,5-dimethylphenyl isocyanate, 3-acetophenyl isocyanate, 2-biphenyl isocyanate, 2,6-diisopropylphenyl isocyanate, 2-ethoxyphenyl isocyanate, 4-ethoxyphenyl isocyanate, 2-ethylphenyl isocyanate, 4-heptyloxy-phenyl isocyanate, 4-isopropylphenyl isocyanate, 2-methoxyphenyl isocyanate, 3-methoxyphenyl isocyanate, 4-methoxyphenyl isocyanate, 4-methyl-3-nitrophenyl isocyanate, 2-nitrophenyl isocyanate, 3-nitrophenyl isocyanate, 4-nitrophenyl isocyanate, 2-phenoxyphenyl isocyanate, 2-propylphenyl isocyanate, o-tolyl isocyanate, m-tolyl isocyanate and p-tolyl isocyanate.

Examples of aliphatic monofunctional isocyanates include cyclohexyl isocyanate, pentyl isocyanate, octyl isocyanate, benzyl isocyanate, dodecyl isocyanate, ethyl isocyanate, heptyl isocyanate, ethoxycarbonyl isocyanate, hexadecyl isocyanate, hexyl isocyanate, 4-methoxybenzyl isocyanate, 2-methylbenzyl isocyanate, 3-methylbenzyl isocyanate and 4-methylbenzyl isocyanate.

Examples of aromatic diisocyanates include 2,4-tolylene diisocyanate (TDI), phenyl diisocyanate, xylene diisocyanate, 4,4'-diphenylmethane diisocyanate (MDI), a mixture (crude MDI) of MDI with triphenylmethane triisocyanate or the like, 1,5-naphthylene diisocyanate, isophorone diisocyanate, dicyclohexylmethane diisocyanate, ethylene diisocyanate, methylene diisocyanate, propylene diisocyanate, tetramethylene diisocyanate and tolidine diisocyanate.

Examples of aliphatic diisocyanates include hexamethylene diisocyanate (HDI), isophorone diisocyanate (IPDI), xylylene diisocyanate, hydrogenated xylylene diisocyanate and dicyclohexylpentane diisocyanate.

Examples of tri- and higher-functional polyisocyanates include triphenylmethane triisocyanate, polymethylene polyphenyl polyisocyanate, TMP-modified TDI, an isocyanurate of TDI, TMP-modified HDI, an isocyanurate of HDI, a biuret of HDI, TMP-modified IPDI and an isocyanurate of IPDI.

The above-listed isocyanate compounds may be used alone or in combination.

The compound (Y) may be suitably chosen depending upon the type of the compound (X) used. Examples of compounds (Y) include those which generate, via photodegradation, active species reactive with the polymerizable group in the compound (X), such as photochemically radical-generating, cation-generating, acid-generating and amine generating agents which are below listed as examples of compounds (D). Such compounds (Y) may be used in combination.

Examples of photochemically amine-generating agents which generate amine upon exposure to a radiation include acyloxy-imino-containing compounds, carbamoyloxyimino-containing compounds and o-nitrobenzyl carbamate.

The carbamoyloxyimino-containing compounds can be obtained via a reaction of an urethane polymer or an isocyanate compound with an oxime compound. Any technique known in the art can be utilized to effect such a reaction. For example, the defined compounds can be obtained by charging the reactants such that equimolar amounts of isocyanate moieties and hydroxyl moieties in oxime are introduced, optionally adding reaction catalysts such as tin and tertiary amine catalysts for isocyanate and hydroxyl groups, and allowing the reactant to react.

If necessary, various additives can be added including a property control agent which will be later described, extender, reinforcer, plasticiser, coloring agent, flame retardant, antisagging agent, antioxidant, age resister, UV absorber, solvent, perfume, pigment, dye, sensitizer for the compound (Y) and the like.

The active energy radiation may for example be in the form of ultraviolet radiation, visible light, infrared ray, electron beam or X-ray.

A source of active energy radiation is suitably chosen depending upon its form of radiation. Suitable sources of active energy radiation include ultrahigh-pressure mercury lamps, high-pressure mercury lamps, medium-pressure mercury lamps, low-pressure mercury lamps, metal halide lamps, black light lamps, microwave-activated mercury lamps, halogen lamps, excimer laser, xenon lamps, fluorescent lamps, sunlight, electron beam emitter and the like.

In the reference aspect of the invention, a conversion of the compound (X) is defined by the following equation:

$$\texttt{Conversion (\%) = [a(0) - a(t)/a(0)] x 100}$$

where,

a(0) = content of the compound (X) in an adhesive composition prior to being exposed to an active energy radiation; and

a(t) = content of the compound (X) in an adhesive composition when t hours lapsed after exposure to an active energy radiation.

The amount of the compound (X) incorporated in the composition can be determined by a method as appropriate to the compound (X) used. Examples of such determination methods include gel permeation chromatography, thin-layer chromatography, affinity chromatography, normal phase chromatography, reversed phase chromatography, infrared spectroscopy, nuclear magnetic resonance spectroscopy, titration as appropriate to the crosslinkable or polymerizable group, quantitative determination by gel fraction and the like.

Also in the reference aspect of the invention, the adhesive composition prior to exposure to the active energy radiation exhibits a viscosity in the range of 1 - 10,000,000 cps at 25 °C. If over 10,000,000 cps, the viscosity is too high to result in satisfactory application of the composition to an adherend. The viscosity in this specification is expressed by a value determined using a Brookfield viscometer with a rotor rotation speed of 10 rpm.

Immediately after exposure of the adhesive composition in accordance with the reference aspect of the invention to the active energy radiation, the compound (X) shows a conversion in the range of 0 - 70 %. That is, when the composition is exposed to the active energy radiation, the compound (Y) is caused to decompose rapidly. On the other hand, the crosslinkable or polymerizable compound (X) is, either in part or whole, left unreacted within a time of a normal combining operation. Accordingly, the composition develops cohesion commensurate with the properties and residual content of the compound (X) to show a sufficient level of adhesion to provide temporary fixing, or alternatively, completes crosslinking rapidly while maintaining sufficient flowability to remain wettable. These permit easy and reliable adhesion of the composition to adherends.

After exposure of the adhesive composition to the active energy radiation and following 24-hour aging thereof at 25 °C, the compound (X) exhibits a conversion in the range of 50 - 100 % and the cured composition shows an elongation at break of 10 - 1,000 % and a dynamic tensile modulus in the range of $10^5$ - $10^9$ Pa. Accordingly, the composition after cure has improved impact-resistant and durable adhesive properties.

That is, even after exposure to the active energy radiation, a crosslinking or polymerization reaction is still allowed to proceed in the form of a dark reaction. This is accompanied by rapid reduction in residual content of the compound (X), resulting in the provision of a cured product with improved impact-resistant and durable adhesive properties.

(Invention)

In the invention, the compound (A) is used having two or more hydrolyzable silyl groups in a molecule. The hydrolyzable silyl group is not particularly specified in type. Examples of hydrolyzable silyl groups include those derived via replacement of at least one hydrogen atom of a silyl group by an alkoxy, oxime, alkenyl-oxy, acetoxy or halogen group. The use of the hydrolyzable silyl group (alkoxysilyl group) derived via replacement of at least one hydrogen atom by an alkoxy group is preferred for its superior storage stability.

Preferably, a polymer having at least two hydrolyzable silyl groups in a molecule is used for the aforementioned hydrolyzable silyl-containing or alkoxysilyl-containing compound. The use of such a polymer eases viscosity design of the adhesive composition and imparts the well-balanced cohesion and adhesion to the adhesive composition after cure. The polymer is not particularly specified in type. Examples of useful polymers include propylene glycol, ethylene glycol and other polyalkylene glycols, polyester, polyamide, polycarbonate, polymethacrylate, polyacrylate, polystyrene, polyolefin, copolymers thereof and the like. Preferred among the above-listed polymers are polyalkylene glycol and polyolfin. These polymers preferably have a weight average molecular weight of 4,000 - 30,000. More preferably, they have a weight average molecular weight of 10,000 - 30,000 and a molecular weight distribution (Mw/Mn) of 1.6 or below.

The alkoxysilyl group, as used herein, encompasses a monoalkylsilyl group, a dialkoxysilyl group and a trialkoxy-silyl group. Examples of alkoxy groups include methoxy, ethoxy, propyloxy, isopropyloxy, butoxy, tert-butoxy, phenoxy, benzyloxy groups. In the case of dialkoxysilyl and trialkoxy-silyl groups, the above-listed alkoxy groups may be used alone or in combination.

The substituting alkoxysilyl group may be placed either at an end or on a side chain of the polymer. It may be placed at both locations.

Also, examples of useful compounds (A) are commercially available, including Kaneka MS Polymers such as MS Polymer S-203, 303 and 903, Kaneka Silyl Polymers such as Silyl SAT-200, MA-403 and MA-447, and Asahi Glass ExceStar ESS-2410, 2420 and 3630.

The type of the compound (B) used to induce crosslinking of the compound (A) is not particularly specified, so long as it shows an accelerating or catalytic action when the crosslinking of the compound (A) is caused to occur in the presence of moisture in the air. Examples include tin compounds such as dibutyltin dilaurate, dibutyltin oxide, dibutyltin diacetate, dibutyltin phthalate, bis(dibutyltin laurate) oxide, dibutyltin bis-acetylacetonate, dibutyltin bis(monoester malate), tin octylate, dibutyltin octoate and dioctyltin oxide; titanate compounds such as tetra-n-butoxy titanate and tetraisopropoxy titanate; amine salts such as dibutylamine-2-ethyl hexoate; and other acid catalysts and basic catalysts. These compounds may be used alone or in combination.

The type of the compound (C) having a polymerizable group in a molecule is not particularly specified, so long as it has a polymerizable substituting group in such as a free-radically polymerizable or cationically polymerizable group. It may contain two or more dissimilar polymerizable groups in a molecule.

Examples of free-radically polymerizable groups include styryl, acryloyl, methacryloyl, vinyl ester groups and the like. Acryloyl and methacryloyl groups are preferred for their superior polymerizability.

Examples of styryl-containing compounds include styrene, indene, $\alpha$-methylstyrene, p-methylstyrene, p-chlorostyrene, p-chloromethylstyrene, p-methoxystyrene, p-tert-butoxystyrene, divinylbenzene and the like.

Examples of acryloyl-containing or methacryloyl-containing compounds include methyl (meth)acrylate, ethyl (meth)acrylate, propyl (meth)acrylate, n-butyl (meth)acrylate, tert-butyl (meth)acrylate, cyclohexyl (meth)acrylate, 2-ethylhexyl (meth)acrylate, n-octyl (meth)acrylate, isooctyl (meth)acrylate, isononyl (meth)acrylate, isomyristyl (meth) acrylate, stearyl (meth)acrylate, isobornyl (meth)acrylate, benzyl (meth)acrylate, 2-butoxyethyl (meth)acrylate, 2-phenoxyethyl (meth)acrylate, glycidyl (meth)acrylate, tetrahydrofurfuryl (meth)acrylate, hexanediol di(meth)acrylate, ethylene glycol di(meth)acrylate, polyethylene glycol di(meth)acrylate, propylene glycol di(meth)acrylate, polypropylene glycol di(meth)acrylate, neopentyl glycol di(meth)acrylate, trimethylolpropane tri(meth)acrylate, pentaerythritol di(meth)acrylate, pentaerythritol tri(meth)acrylate, pentaerythritol tetra(meth)acrylate, dipentaerythritol hexa(meth)acrylate, epoxy acrylate, polyester acrylate, urethane acrylate, 2-hydroxyethyl (meth)acrylate, 3-hydroxypropyl (meth)acrylate, 2-hydroxypropyl (meth)acrylate, 4-hydroxybutyl(meth)acrylate, 2-hydroxybutyl (meth)acrylate, 5-hydroxypentyl (meth)acrylate, 6-hydroxyhexyl (meth)acrylate, 3-hydroxy-3-methylbutyl (meth)acrylate, 2-hydroxy-3-phenoxypropyl (meth)acrylate, pentaerythritol tri(meth)acrylate, 2-[(meth)acryloyloxy] ethyl 2-hydroxyethyl phthalate, 2-[(meth)acryloyloxy]ethyl 2-hydroxypropyl phthalate and the following compounds:

Compound 1

$CH_2=CH-C(O)O-CH_2CH_2O-[C(O)CH_2CH_2CH_2CH_2CH_2O]$ n-H (n=110)

Compound 2

$CH_2=C(CH_3)-C(O)O-CH_2CH_2O-[C(O)CH_2CH_2CH_2CH_2CH_2O]n-H$ (n=1-10)

Compound 3

$CH_2=CH-C(O)O-(CH_2CH_2O)n-H$ (n=1-12)

Compound 4

$CH_2=C(CH_3)-C(O)O-(CH_2CH_2O)n-H$ (n=1-12)

Compound 5

$CH_2=CH-C(O)O-[CH_2CH(CH_3)O]n-H(n=1-12)$

Compound 6

$CH_2=C(CH_3)-C(O)O-[CH_2CH(CH_3)O]n-H(n=1-12)$

Compound 7

$CH_2=C(CH_3)-C(O)O-(CH_2CH_2O)n-[CH_2CH(CH_3)O]m-H(n=1-12)$

Compound 8

$CH_2=CH-C(O)O-(CH_2CH_2O)n-[CH_2CH(CH_3)O]m-H(n=1-12)$

Compound 9

$CH_2=C(CH_3)-C(O)O-(CH_2CH_2O)n-(CH_2CH_2CH_2CH_2O)m-H(n=1-12)$

Compound 10

$CH_2=CH-C(O)O-(CH_2CH_2O)n-(CH_2CH_2CH_2CH_2O)m-H(n=1-12)$

Compound 11

$CH_2=CH-C(O)O-(CH_2CH_2O)n-CH_3(n=1-10)$

Compound 12

$CH_2=C(CH_3)-C(O)O-(CH_2CH_2O)n-CH_3(n=1-30)$

Compound 13

$CH_2=CH-C(O)O-[CH_2CH(CH_3)O]n-CH_3(n=1-10)$

Compound 14

$CH_2=C(CH_3)-C(O)O-[CH_2CH(CH_3)O]n-CH_3(n=1-10)$

Compound 15

$CH_2=C(CH_3)-C(O)O-(CH_2CH_2O)n-[CH_2CH(CH_3)O]m-H(n=1-10)$

Compound 16

$CH_2=CH-C(O)O-(CH_2CH_2O)n-[CH_2CH(CH_3)O]m-H(n=1-10)$

Compound 17

$CH_2=CH-C(O)O-[CH_2CH(CH_3)O]n-C(O)-CH=CH_2(n=1-20)$

Compound 18

$CH_2=C(CH_3)-C(O)O-[CH_2CH(CH_3)O]n-C(O)-C(CH_3)=CH_2(n=1-20)$

Compound 19

$CH_2=CH-C(O)O-(CH_2CH_2O)n-C(O)-CH=CH_2(n=1-20)$

Compound 20

$$CH_2=C(CH_3)-C(O)O-(CH_2CH_2O)n-C(O)-C(CH_3)=CH_2 (n=1-20).$$

Examples of vinyl ester-containing compounds include vinyl acetate, vinyl propionate, vinyl butyrate, vinyl caproate, vinyl benzoate and vinyl cinnamate.

Examples of cationically polymerizable groups include epoxy, oxetanyl, vinyloxy and styryl groups.

Examples of epoxy-containing compounds include bisphenol A epoxy resins, hydrogenated bisphenol A epoxy resins, bisphenol F epoxy resins, novolac epoxy resins, cycloaliphatic epoxy resins, brominated epoxy resins, rubber modified epoxy resins, urethane modified epoxy resins, glycidyl ester compounds, epoxidized polybutadiene and epoxydized styrene-butadiene-styrene copolymers.

Examples of oxetanyl-containing compounds include 3-ethyl-3-hydroxymethyloxetane, 3-ethyl-3-phenoxymethyloxetane, 3-ethyl-3-hexyloxymethyloxetane, 1,4-bis[(3-ethyl-3-oxetanylmethoxy)methyl]benzene and the like.

Examples of vinyloxy-containing compounds include n-propyl vinyl ether, n-butyl vinyl ether, isobutyl vinyl ether, tert-butyl vinyl ether, tert-amyl vinyl ether, cyclohexyl vinyl ether, 2-ethylhexyl vinyl ether, dodecyl vinyl ether, octadecyl vinyl ether, 2-chloroethyl vinyl ether, ethylene glycol butyl vinyl ether, triethylene glycol methyl vinyl ether, (4-vinyloxy) butyl benzoate, ethylene glycol divinyl ether, diethylene glycol divinyl ether, triethylene glycol divinyl ether, tetraethylene glycol divinyl ether, butane-1,4-diol-divinyl ether, hexane-1,6-diol-divinyl ether, cyclohexane-1,4-dimethanol-divinyl ether, di(4-vinyloxy)butyl isophthalate, di(4-vinyloxy)butyl glutarate, di(4-vinyloxy)butyl succinate, trimethylolpropane trivinyl ether, 2-hydroxyethyl vinyl ether, 4-hydroxybutyl vinyl ether, 6-hydroxyhexyl vinyl ether, cyclohexane-1,4-dimethanol-monovinyl ether, diethylene glycol monovinyl ether, 3-aminopropyl vinyl ether, 2-(N,N-diethylamino)ehtyl vinyl ether, urethane vinyl ether, polyester vinyl ether and the like.

Examples of styryl-containing compounds include styrene, indene, $\alpha$-methylstyrene, p-methylstyrene, p-chlorostyrene, p-chloromethylstyrene, p-methoxystyrene, p-tert-butoxystyrene, divinylbenzene and the like.

Preferably, the compound (F) is used for a part of the compound (C). The compound (F) is a polymerizable compound containing at least one polymerizable group in a molecule and having a weight average molecular weight of 3,000 or greater. The type of this polymerizable compound (F) is not particularly specified if it gives a long distance between crosslinks, develops cohesion, contains at least one free-radically polymerizable group and has a molecular weight of 3,000 or greater. Examples of compounds (F) include polymerizable compounds derived via terminal modification of polystyrene, polymethyl methacrylate, polypropylene or polyethyelene butylene; urethane acrylate; polyether acrylate and the like.

The use of the compound (F) for a part of the compound (C) increases a creep resistance of the adhesive composition initially after combination of adherends.

Preferably, the weight of the compound (F) in 100 parts compound (C) is 0.1 - 70 parts. If the weight of the compound (F) is below 0.1 parts, the effectiveness of using the compound (F) may become negligible. On the other hand, if it exceeds 70 parts, irradiation may in some cases cause a marked increase in cohesion and accordingly a decrease in wettability of the adhesive composition to adherends, which results in the failure to obtain the sufficient creep resistance.

The compound (D) that photoinitiates polymerization of the polymerizable group in the compound (C) can be suitably chosen depending upon the polymerization reaction mechanism of the polymerizable group contained in the compound (C).

In the case where the polymerizable group is a free-radically polymerizable group, any type of compound (photochemically radical-generating agent) can be used if it is able to induce free-radical polymerization upon exposure to radiation. Examples of such compounds include acetophenone derived compounds such as 4-(2-hydroxyethoxy) phenyl(2-hydroxy-2-propyl) ketone, $\alpha$-hydroxy-$\alpha,\alpha$'-dimethylacetophenone, methoxyacetophenone and 2, 2-dimethoxy-2-phenylacetophenone; benzoin ethers such as benzoin ethyl ether and benzoin propyl ether; and ketal derived compounds such as benzyldimethyl ketal. Other useful compounds include, for example, halogenated ketone, acylphosphine oxide, acyl phosphonate, 2-methyl-1-[4-(methylthio)phenyl]-2-morpholinopropane-1-on, 2-benzyl-2-N,N-dimethylamino-1-(4-morpholinophenyl)-1-butanone, 2,4,6-trimethylbenzoyl-diphenylphosphine oxide, bis-(2,6-dimethoxybenzoyl)-2,4,4-trimethylpentyl-phos phine oxide, bis(n5-cyclopentadienyl)-bis(pentafluorophenyl) -titanium and bis(n5-cyclopentadienyl)-bis[2,6-difluoro-3-(1 H-pyri-1-yl)phenyl]-titanium. The above-listed compounds may be used alone or in combination. Commercial products containing these compounds can also be used.

In the case where the polymerizable group is a cationically polymerizable group, any type of compound (photochemically cation-generating agent) can be used if it is able to induce cationic polymerization upon exposure to a radiation. Examples of such compounds include iron-allene complex compounds, aromatic diazonium salts, aromatic iodonium salts, aromtaic sulfonium salts, pyridinium, aluminum complex/silanol salts and the like. These are also commiercially avialable, examples of which include Ciba Geigy IRGACURE 261, Asahi Denka OPTOMER SP-150, SP-151, SP-170 and SP-171, General Electric UVE-1014, Sartomer CD-1012, Sanshin Chemical SANAID SI-60L, SI-80L and SI-100L, Nippon Soda CI-2064, CI-2639, CI-2624 and CI-2481, Rhone Poulenc RHODORSIL PHOTOINITIATOR 2074, Union Carbide UVI-6990, Midori Chemical BBI-103, MPI-103, TPS-103, MDS-103, DTS-103, NAT-103 and NDS-103, and the like. In the approxiamate temeprature range of 20 - 80 °C, the use of compounds having low thermal catalytic activities is preferred in terms of storage stability. The above-listed compounds may be used alone or in combination.

When desired, a photosensitizer may also be added to increase a radiation sensitivity of the photochemically cation-generating agent. Suitable photosensitizers include anthracene, perylene, coronene, tetracene, benzanthracene, phenothiazine, flavin, acridine, ketocoumarin, thioxanthone derivatives, benzophenone, acetophenone, 2-chlorothioxanthone, 2,4-dimethylthioxanthone, 2,4-diethylthioxanthone, 2,4-diisopropylthioxanthone, isopropylthioxanthone and the like.

The wavelength photosensitivity of the compound (D) is not particularly specified, but the use of the compound which is sensitive to a radiation in the wavelength region of 300 - 800 nm is preferred. The compound (D), if only sensitive in the wavelength region below 300 nm, is able to obtain a sufficient energy to initiate rapid polymerization or crosslinking of the compound (C), but thick coating of the adhesive composition containing such a compound may lead to an increase in cohesion of its surface alone, possibly resulting in the uneven development of initial cohesion over its entire bulk or in the marked decrease in wettability of its irradiated surface. On the other hand, the compound (D), if only sensitive in the wavelength region over 800 nm, tends to readily decompose even at a low energy (thermal energy) level and initiate polymerization or crosslinking of the compound (C). This tendency may in some cases adversely affect the storage stability.

The thixotropic agent (E) may be suitably chosen from compounds which can impart a thixotropic property to the adhesive composition. Examples of such compounds include various silicas such as colloidal silica, surface-treated calcium carbonates such as hydrophobic calcium carbonate, glass balloons, glass beads, polyvinyl pyrrolidone and the like. Among these, glass balloons, glass beads, various silicas and surface-treated calcium carbonates are preferred. Preferably, this thixotropic agent has a surface with a high affinity for the compound (A) or (C) for use in the adhesive composition of the present invention. Where urethane acrylate is used for the compound (C), the thixotropic agent (E) is preferably in the form of glass balloons. Where $\alpha,\omega$-diacryloyl-poly(propylene glycol) is used for the compound (C), the use of surface-treated substances, e.g., surface-treated calcium carbonates, is preferred.

The blending proportions of the components incorporated in the adhesive composition of the invention enable the adhesive composition to exhibit the superior application properties with a machine and improved storage stability, extended pot life, and the ability to develop initial cohesion by short-time irradiation. The blending proportions are 0.01 - 20 parts by weight of the compound (B) which initiates crosslinking of the compound (A), 15 - 100 parts by weight of the compound (C) having a polymerizable group in a molecule, and 0.01 - 20 parts by weight of the compound (D) which initiates polymerization of the polymerizable group in the compound (C) upon exposure to a radiation are incorporated, based on 100 parts by weight of the compound (A) having at least two hydrolyzable silyl groups in a molecule. The thixotropic agent (E) is added in the amount of 20 - 65 % by volume (25 °C), based on 100 % by volume of all compounds (A) - (E).

If the amount of the compound (B) incorporated in the composition is below 0.01 parts by weight, a cure rate of the compound (A) may in some cases be reduced to the degree that is substantially unsuited for a practical use. By contrast, the amount of exceeding 20 parts by weight, while effective to accelerate the cure rate sufficiently, affects markedly on a bulk after cure to sometimes result in the difficulty to obtain sufficient adhesive strength.

If the amount of the compound (C) incorporated in the composition is below 15 parts by weight, the expected initial cohesion may not result from photopolymerization or photocrosslinking, even with the addition of excess amount of the thixotropic agent. On the other hand, the amount of exceeding 100 parts by weight, while effective to impart the sufficient initial cohesion after cure, sometimes increases the cohesion excessively to reduce wettability of the adhesive composition, resulting in the failure to exhibit sufficient initial adhesiveness.

If the amount of the compound (D) incorporated in the composition is below 0.01 parts by weight, a polymerization or crosslinking rate of the compound (C) by irradiation may be reduced by a marked extent, resulting in the failure for the adhesive composition to exhibit initial adhesion after exposure to a radiation. On the other hand, the amount of exceeding 20 parts by weight, while effective to accelerate a cure rate sufficiently, affects markedly on a bulk after cure to sometimes result in the difficulty to obtain sufficient adhesive strength.

If the amount of the thixotropic agent (E) incorporated in the composition is below 20 % by volume, it may become difficult to obtain a sufficient thixotropic property. The difficulty to obtain initial adhesion after exposure to a radiation may also result. By contrast, if it exceeds 65 % by volume, the adhesive composition of the present invention may show a marked viscosity increase, resulting in the difficult application thereof by a machine or in the marked reduction of the application rate.

Various additives can be added, when needed, to the adhesive composition of the present invention. Examples of additives include property control agents such as for improving tensile properties, extenders, reinforcers, plasticizers, colorants, flame retarders and the like.

Illustrative of property control agents such as for improving tensile properties are various silane coupling agents, including vinyltrimethoxysilane, dimethyldimethoxysilane, methyltrimethoxysilane, methyltriethoxysilane, tetramethoxysilane, tetraethoxysilane, phenyltrimethoxysilane, diphenyldimethoxysilane, 3-aminopropyltrimethoxysilane, 3-aminopropylmethyldimethoxysilane, 3-aminopropyltriethoxysilane, N-(2-aminoethyl)-3-aminopropyltrimethoxysilane, N-(2-aminoethyl)-3-aminopropyltriethoxysilane, N,N'-bis-[3-(trimethoxysilyl)propyl]ethylenediamine, N,N'-bis-[3-(triethoxysilyl)propyl]ethylenediamine, N,N'-bis-[3-(trimethoxysilyl)propyl]hexaethylenediamine, N,N'-bis-[3-(triethoxysilyl)propyl] hexaethylenediamine and the like. These may be used alone or in combination.

Suitable for use as extenders are those which, when added to the adhesive composition in accordance with the present invention, do not provide significant effect on the thixotropic properties thereof. Examples of extenders include talc, clay, calcium carbonate, magnesium carbonate, anhydrous silicon, hydrated silicon, calcium silicate, titanium dioxide, carbon black and the like. These may be used alone or in combination.

Examples of plasticizers include phosphate esters such as tributyl phosphate and tricresyl phosphate, phthalate esters such as dioctyl phthalate, aliphatic esters of monobasic acid such as glycerol monooleate ester, aliphatic esters of dibasic acid such as dioctyl adipate, polypropylene glycols and the like. These may be used alone or in combination.

Other than the above-described additives, the adhesive composition of the present invention may also contain an antisagging agent, antioxidant, age resister, UV absorber, solvent, perfume, pigment, dye or the like, when necessary.

The method of joining members in accordance with the present invention is characterized as comprising, in sequence, applying the adhesive composition of the first invention to one member, exposing a top surface of the applied adhesive composition layer to a radiation and combining the one member with the other member.

In the joining method, in the case where both members permit substantially no transmission of a radiation, it becomes difficult to expose the adhesive composition to a radiation after application of the adhesive composition to one member and subsequent combination thereof with the other member. On the other hand, even if one attempted to apply the irradiated adhesive composition to one member and then combine the one member with other member, the difficulty to apply the adhesive composition still remains, since the adhesive composition increases its viscosity and shows a marked cohesion increase upon exposure to a radiation.

In the joining method of the present invention, the radiation source is not particularly specified, so long as it can emit a radiation including a wavelength region that corresponds to an absorption region of the compound (C) or the sensitizer added to improve photo-sensitivity, and is suitably chosen depending upon the type of the compound (C) or the sensitizer used. Examples of suitable radiation sources include low-pressure mercury lamps, medium-pressure mercury lamps, high-pressure mercury lamps, ultrahigh-pressure mercury lamps, excimer laser, chemical lamps, black light lamps, microwave-activated mercury lamps, metal halide lamps, sodium lamps, fluorescent lamps, sunlight and the like.

## BEST MODE FOR CARRYING OUT THE INVENTION

The present invention is described in more detail with reference to the following non-limiting examples.

(1) Preparation of Adhesive Compositions

(EXAMPLES 5 - 13, REFERENCE EXAMPLES 1 - 4 AND COMPARATIVE EXAMPLES 1 - 5)

According to the formulations shown in Tables 1 - 3, the compounds (A), (B), (C) and (D), optionally with the compound (F), were first mixed with stirring to homogeneity in a beaker protected against a radiation by an aluminum foil (the blend, if containing a powder, was mixed under a light-shielded condition while maintained at 50 °C). After the blend was mixed to homogeneity, the thixotropic agent (E) was added and dispersed therein using a stirring machine (TK HOMO DISPER manufactured by Tokushu Kika Kogyo Co., Ltd.) under a stirring condition of 500 rpm x 10 minutes. As a result, adhesive compositions of the present invention were obtained.

(EXAMPLE 14)

(Synthesis of Urethane Prepolymer)

100 parts by weight of polyethertriol (ADEKA Polyether T-4000, product of Asahi Denka Indsutries) derived from trimethylolpropane having a molecular weight of 4,000 and propylene oxide, 100 parts by weight of propylene oxide (molecular weight of 6,000) and hexamethylene diisocyanate were mixed such that a ratio NCO/OH was brought to 1.9. The mixture was allowed to react at 80 °C for 5 hours. As a result, a urethane prepolymer was obtained.

(Synthesis of Photochemically Amine-Generating Agent)

0.1 mole acetophenoneoxime dissolved in 100 ml THF was added to 0.05 mole hexamethylene diisocyanate. The mixture was stirred under dry and nitrogen atmosphere at 50 °C for 4 hours. Thereafter, THF was allowed to volatilize. The resulting white solid was dissolved in MEK at 80 °C and recrystalized therefrom to achieve purification. The purified compound was rendered as a photochemically amine-generating agent.

(Preparation of Composition)

The photochemically amine-generating agent and anthracene photosensitizer were added to 100 parts by weight of the above-obtained urethane prepolymer in the respective amounts specified in Table 4. The mixture was stirred to homogeneity to obtain a composition.

(COMPARATIVE EXAMPLE 6)

The urethane prepolymer obtained in Example 14 was used alone to prepare a composition of Comparative Example 6.

(2) PERFORMANCE EVALUATION METHODS

The adhesive compositions obtained in Examples 5 - 14 Reference Examples 1-4, and Comparative Examples 1 - 6 were evaluated for viscosity, compressive shear bond strength, shear creep, pot life (working life), initial creep resistance, conversion, elongation at break of cured compositions, dynamic tensile modulus and dynamic shear modulus according to the following procedures. The results of Examples 5 - 13 and Reference Examples 1-4 are listed in Tables 5 and 6. The results of Comparative Examples 1-5 are listed in Table 7. The results of Example 14 and Comparative Examples 6 are listed in Table 4.

1) Viscosity

The viscosity of the compositions was measured at 25 °C using a rotational viscometer (Brookfield viscometer made by Tokyo Keiki Co., Ltd.) with a number 4 spindle at a rotational speed of 10 rpm, according to JIS K 6833. The spindle number and rotational speed were suitably selected in evaluating the adhesive composition if it excluded the thixotropic agent (E), fell beyond a measurable range under the above conditions or was a Newtonian viscous fluid.

2) Compressive Shear Bond Strength

Each adhesive composition was coated onto a slate adherend (35 mm x 25 mm x 8 mm). The coated area was 25 mm x 25 mm x 0.3 mm. This slate adherend was combined with another slate adherend to fabricate an evaluation test sample. The sample obtained was subjected to a compressive test (at a crosshead speed of 300 mm/min) according to JIS K 6852, so that the compressive shear bond strength of the composition prior to exposure to a radiation was evaluated.
Next, each adhesive composition was coated on a slate adherend in the same manner as stated above. The coated surface was exposed to an ultraviolet radiation at 365 nm and at an energy of 700 mJ/cm$^2$ (Examples 5 - 13, Reference Examples 1 - 4 and Comparative Examples 1 - 5) or at an energy of 7,000 mJ/cm$^2$ (Example 14 and Comparative Example 6) using a high-pressure mercury lamp. Thereafter, another slate adherend was combined therewith to fabricate an evaluation test sample. The sample obtained was subjected to a compressive test (at a crosshead speed of 300 mm/min) according to JIS K 6852, so that the compressive shear bond strength of the composition after exposure to a radiation was evaluated.
Further, evaluation test samples were fabricated in the same manner as used in evaluating the compressive shear bond strength of the composition immediately after exposure to a radiation. The samples obtained were aged at 25 °C and 63 % humidity for 24 hours, or separately aged for 7 days, and subjected to a compressive test (at a crosshead speed of 300 mm/min) according to JIS K 6852, so that the compressive shear bond strength of the composition either after 24 hours or 7 days from exposure to a radiation was evaluated.

3) Shear Creep (Initial Shear Creep Test)

In the fabrication of an evaluation sample, each composition was coated on a pentite steel plate (25 mm x 150 mm x 1 mm). The coated area was 25 mm x 25 mm. The coated composition was exposed to an ultraviolet radiation.

After combination with another pentite steel plate (25 mm x 150 mm x 1 mm), the composition was subjected to aging at 23 °C for a duration specified in each Example to obtain an evaluation sample. Creep characteristics were evaluated by suspending one of the adherends of the obtained sample so that the own weight of the other adherend acted as a shear load. Evaluation was made by observing whether or not the load fell within 30 minute from the start of suspension.

4) Pot Life (Working Life)

Each adhesive composition was coated on a glass substrate to a thickness of 0.35 mm and left to stand under conditions of 23 °C and 65 % humidity while maintained unexposed to a radiation. The period of time during which the adhesive composition remained unwebbed after it had been coated on the substrate was evaluated as a pot life.

5) Initial Creep Resistance (Initial 90° Peel Creep Test)

Each adhesive composition was coated on a 25 mm x 100 mm x 0.5 mm zinc steel plate to a size of 25 mm x 50 mm x 0.35 mm. The coated surface was exposed to an ultraviolet radiation at 365 nm and at an energy of 700 mJ/cm$^2$ (Examples 5 - 13, Reference Examples 1-4 and Comparative Examples 1 - 5) or at an energy of 7,000 mJ/cm$^2$ (Example 14 and Comparative Example 6) using a high-pressure mercury lamp, followed by combination thereof with a 50 mm x 150 mm x 8 mm slate adherend. Immediately after the combination, the slate adherend was fixed at its both ends such that it oriented horizontally and the zinc steel plate faced downward, and a mass of a specific weight was suspended from one end of the zinc steel plate. The maximum weight of the mass which caused no delamination within one hour was recorded. The heavier weight of the mass indicates the increased initial creep resistance.

6) Conversion

Immediately after termination of exposure to an active energy radiation, the adhesive composition was aged at 25 °C for 12 hours or 24 hours. A conversion of the compound (C) in the composition after the 12-hour or 24-hour aging was measured.
In the conversion measurement, the content of the compound (C) in the composition was determined by a gel permeation chromatograph equipped with an RI (Retlactive Index) device. The conversion of the compound (C) was calculated from the ratio of its content in the composition after to before exposure to the active energy radiation.

7) Elongation at Break of Cured Composition

Each composition was exposed to an active energy radiation and subsequently subjected to 24-hour aging at 25 °C. The elongation at break of the cured composition was then measured at 25 °C using a tensile tester at a crosshead speed of 500 mm/minute, according to JIS K 6301.

8) Dynamic Tensile Modulus

Each composition was exposed to an active energy radiation and subsequently subjected to 24-hour aging at 25 °C. The dynamic tensile modulus of the cured composition was then measured at 25 °C using a viscoelastic spectrometer at an applied frequency of 10 Hz.

9) Dynamic Shear Modulus

Each composition was exposed to an active energy radiation. Immediately thereafter, the dynamic shear modulus of the cured composition was measured at 25 °C using a viscoelastic spectrometer at an applied frequency of 0.016 Hz.

[Table 1]

| Classification | Composition, Product Name | Maker | Reference Examples | | | | Examples | | |
|---|---|---|---|---|---|---|---|---|---|
| | | | 1 | 2 | 3 | 4 | 5 | 6 | 7 |
| Compound (A) | MS Polymer, S-303 | Kaneka Corp. | 100 | 100 | 100 | 100 | 100 | 100 | 100 |

(continued)

| Classification | Composition, Product Name | Maker | Reference Examples | | | | Examples | | |
|---|---|---|---|---|---|---|---|---|---|
| | | | 1 | 2 | 3 | 4 | 5 | 6 | 7 |
| Compound (B) | Tin Catalyst, SB-65 | Sankyo Yuki-Gosei Co. | 1 | 1 | 1 | 1 | 1 | 1 | 1 |
| Compound (C) | Urethane Acrylate, AH-600 | Kyoei Chemical Co. | 18 | 15 | - | - | 18 | 18 | 18 |
| | α,ω-Diacryloyl-Polypropylene Glycol, APG-700 | Shin-Nakamura Chem. Ind. Co. | - | - | 15 | - | - | - | - |
| | Poly (Propylene Glycol) Mono Acrylate, Biscoat #320 | Osaka Org. Chem. Co. | - | 15 | 5 | - | - | - | - |
| | 3-Phenoxy-2-Hydroxypropyl Acrylate, M-600A | Kyoei Chemical Co. | - | - | - | 80 | - | - | - |
| | P-Cumyl Phenol Ethylene Oxide Modified Acrylate, Aronix M-110 | Toagosei Co. | - | - | - | - | - | - | - |
| Compound (F) | Polymethyl Methacrylate Macromonomer, AA-6 | Toagosei Co. | - | - | - | - | - | - | - |
| | Urethane Acrylate, Aronix M-1310 | Toagosei Co. | - | - | - | - | - | - | - |
| Compound (D) | Irgacure-819 | Ciba Specialty Chemical Co. | 0.5 | 0.5 | 0.5 | 0.5 | 0.5 | 0.5 | 0.5 |
| Thixotropic Agent (E) | Glass Balloon, Q-Cell 520 | PQ Australia Pty. Co. | - | - | - | - | 60 | 50 | - |
| | Surface-Treated Calcium Carbonate, Viscolite U | Shiraishi Ind. Co. | - | - | - | - | - | - | 30 |
| Units of formulated compositions: Compounds (A)-(D) in parts by weight and Thixotropic agent (E) in % by volume | | | | | | | | | |

[Table 2]

| Classification | Composition, Product Name | Maker | Example | | | | | |
|---|---|---|---|---|---|---|---|---|
| | | | 8 | 9 | 10 | 11 | 12 | 13 |
| Compound (A) | MS Polymer, S-303 | Kaneka Corp. | 100 | 100 | 100 | 100 | 100 | 100 |
| Compound (B) | Tin Catalyst, SB-65 | Sankyo Yuki-Gosei Co. | 1 | 1 | 1 | 1 | 1 | 1 |

(continued)

| Classification | Composition, Product Name | Maker | Example | | | | | |
| | | | 8 | 9 | 10 | 11 | 12 | 13 |
|---|---|---|---|---|---|---|---|---|
| Compound (C) | Urethane Acrylate, AH-600 | Kyoei Chemical Co. | 18 | 15 | - | - | 15 | - |
| | α,ω-Diacryloyl-Polypropylene Glycol, APG-700 | Shin-Nakamura Chem. Ind. Co. | - | - | 15 | - | - | - |
| | Poly (Propylene Glycol) Mono Acrylate, Biscoat #320 | Osaka Org. Chem. Co. | - | 15 | 5 | - | 15 | - |
| | 3-Phenoxy-2-Hydroxypropyl Acrylate, M-600A | Kyoei Chemical Co. | - | - | - | 80 | - | - |
| | P-Cumyl Phenol Ethylene Oxide Modified Acrylate, Aronix M-110 | Toagosei Co. | - | - | - | - | - | 30 |
| Compound (F) | Polymethyl Methacrylate Macromonomer, AA-6 | Toagosei Co. | - | - | - | - | 1 | - |
| | Urethane Acrylate, Aronix M-1310 | Toagosei Co. | - | - | - | - | - | 30 |
| Compound (D) | Irgacure-819 | Ciba Specialty Chemical Co. | 0.5 | 0.5 | 0.5 | 0.5 | 0.5 | 0.5 |
| Thixotropic Agent (E) | Glass Balloon, Q-Cell 520 | PQ Australia Pty. Co. | - | 60 | - | - | - | - |
| | Surface-Treated Calcium Carbonate, Viscolite U | Shiraishi Ind. Co. | 50 | - | 50 | 40 | 60 | 50 |
| Units of formulated compositions: Compounds (A)-(D) in parts by weight and Thixotropic agent (E) in % by volume | | | | | | | | |

[Table 3]

| Classification | Composition, Product Name | Maker | Comparative Example | | | | |
| | | | 1 | 2 | 3 | 4 | 5 |
|---|---|---|---|---|---|---|---|
| Compound (A) | MS Polymer, S-303 | Kaneka Corp. | 100 | 100 | 100 | - | 100 |
| Compound (B) | Tin Catalyst, SB-65 | Sankyo Yuki-Gosei Co. | - | 1 | 1 | 1 | 1 |

(continued)

| Classification | Composition, Product Name | Maker | Comparative Example | | | | |
|---|---|---|---|---|---|---|---|
| | | | 1 | 2 | 3 | 4 | 5 |
| Compound (C) | Urethane Acrylate, AH-600 | Kyoei Chemical Co. | - | - | - | - | 10 |
| | α,ω-Diacryloyl-Polypropylene Glycol, APG-700 | Shin-Nakamura Chem. Ind. Co. | - | - | - | 100 | - |
| | Poly (Propylene Glycol) Mono Acrylate, Biscoat #320 | Osaka Org. Chem. Co. | - | - | - | - | - |
| | 3-Phenoxy-2-Hydroxypropyl Acrylate, M-600A | Kyoei Chemical Co. | - | - | - | - | - |
| | P-Cumyl Phenol Ethylene Oxide Modified Acrylate, Aronix M-110 | Toagosei Co. | - | - | - | - | - |
| Compound (F) | Polymethyl Methacrylate Macromonomer, AA-6 | Toagosei Co. | - | - | - | - | - |
| | Urethane Acrylate, Aronix M-1310 | Toagosei Co. | - | - | - | - | - |
| Compound (D) | Irgacure-819 | Ciba Specialty Chemical Co. | - | - | - | 0.5 | 0.5 |
| Thixotropic Agent (E) | Glass Balloon, Q-Cell 520 | PQ Australia Pty. Co. | - | - | 60 | - | - |
| | Surface-Treated Calcium Carbonate, Viscolite U | Shiraishi Ind. Co. | - | - | - | - | - |
| Units of formulated compositions: Compounds (A)-(D) in parts by weight and Thixotropic agent (E) in % by volume | | | | | | | |

[Table 4]

| Formulated Composition | | Example 14 | Comparative Example 6 |
|---|---|---|---|
| | Urethane Prepolymer | 100 | 100 |
| | Photochemical Amine Generating Agent | 10 | - |
| | Photosensitizer Anthracene | 0.5 | - |

(continued)

| | | | Example 14 | Comparative Example 6 |
|---|---|---|---|---|
| Performance Evaluation | Viscosity (cps) | Before Irradiation | 100000 | 100000 |
| | | Imm. After Irradiation | 100000 | 100000 |
| | Compressive Shear Bond Strength (kgf/cm$^2$) | Before Irradiation | <0.01 | <0.01 |
| | | Imm. After Irradiation | <0.01 | <0.01 |
| | | 24 Hrs. After Irradiation | 6.5 | 1.2 |
| | | 7 Days After Irradiation | 7.1 | 3.1 |
| | Shear Creep | Imm. After Irradiation | Fell | Fell |
| | | 5 Min. After Irradiation | Sustained | Fell |
| | Pot Life (hrs.) | | > 12 | > 12 |
| | Conversion (%) | Imm. After Irradiation | 14 | 0 |
| | | 12 Hrs. After Irradiation | 55 | 5 |
| | | 24 Hrs. After Irradiation | 90 | 32 |
| | Elongation at Break (%) | | 290 | Immeasurable |
| | Dynamic Tensile Modulus (Pa) | | $1.79 \times 10^6$ | Immeasurable |

[Table 5]

| | | Reference Examples | | | | Examples | | |
|---|---|---|---|---|---|---|---|---|
| | | 1 | 2 | 3 | 4 | 5 | 6 | 7 |
| Viscosity (cps) | | 14000 | 10000 | 12000 | 500 | 440000 | 330000 | 250000 |
| Compressive Shear Bond Strength (kgf/cm$^2$) | Before Irradiation | <0.01 | <0.01 | <0.01 | <0.01 | <0.01 | <0.01 | <0.01 |
| | Imm. After Irradiation | <0.01 | <0.01 | <0.01 | <0.01 | 0.4 | 0.3 | 0.5 |
| | 24 Hrs. After Irradiation | 53 | 65 | 59 | 64 | 14 | 13 | 13 |
| | 7 Days After Irradiation | 19 | 17 | 16 | 13 | 17 | 16 | 14 |
| Shear Creep | Imm. After Irradiation | Fell | Fell | Fell. | Sustained | Sustained | Sustained | Sustained |
| | 10 Min. After Irradiation | Sustained | Sustained | Sustained | Sustained | Sustained | Sustained | Sustained |
| Pot Life (hrs.) | | > 12 | > 12 | > 12 | > 12 | > 12 | > 12 | > 12 |
| Initial 90° Peel Creep (g) | | < 100 | < 100 | < 100 | < 100 | 200 | 200 | 100 |
| Conversion (%) | Imm. After Irradiation | 55.3 | 34 | 45 | 51 | 15 | 13 | 55 |
| | 12 Hrs. After Irradiation | 71 | 76 | 64 | 78 | 63 | 57 | 67 |
| | 24 Hrs. After Irradiation | 79 | 81 | 77 | 84 | 72 | 68 | 70 |
| Elongation at Break (%) | | 150 | 130 | 110 | 350 | 45 | 75 | 110 |
| Dynamic Tensile Modulus (Pa) | | $6.80 \times 10^6$ | $3.90 \times 10^6$ | $5.60 \times 10^6$ | $8.40 \times 10^5$ | $3.05 \times 10^7$ | $1.84 \times 10^7$ | $8.34 \times 10^6$ |
| Dynamic Shear Modulus (Pa) | | $2.59 \times 10^4$ | $2.14 \times 10^4$ | $1.89 \times 10^4$ | $4.33 \times 10^4$ | $8.31 \times 10^5$ | $7.88 \times 10^6$ | $1.19 \times 10^5$ |

[Table 6]

| | | Example | | | | | |
|---|---|---|---|---|---|---|---|
| | | 8 | 9 | 10 | 11 | 12 | 13 |
| Viscosity (cps) | | 450000 | 400000 | 340000 | 6500 | 400000 | 480000 |
| Compressive Shear Bond Strength (kgf/cm$^2$) | Before Irradiation | <0.01 | <0.01 | <0.01 | <0.01 | <0.01 | <0.01 |
| | Imm. After Irradiation | 0.5 | 0.8 | 0.5 | 0.9 | 0.8 | 0.6 |
| | 24 Hrs. After Irradiation | 10 | 15 | 12 | 14 | 15 | 17 |
| | 7 Days After Irradiation | 13 | 16 | 18 | 14 | 16 | 17 |
| Shear Creep | Imm. After Irradiation | Sustained | Sustained | Sustained | Sustained | Sustained | Sustained |
| | 10 Min. After Irradiation | Sustained | Sustained | Sustained | Sustained | Sustained | Sustained |
| Pot Life (hrs.) | | > 12 | > 12 | > 12 | > 12 | > 12 | > 12 |
| Initial 90° Peel Creep (g) | | 100 | 200 | 100 | 100 | 400 | 400 |
| Conversion (%) | Imm. After Irradiation | 59 | 57 | 59 | 39 | 57 | 41 |
| | 12 Hrs. After Irradiation | 65 | 68 | 73 | 76 | 80 | 68 |
| | 24 Hrs. After Irradiation | 69 | 75 | 82 | 81 | 84 | 73 |
| Elongation at Break (%) | | 135 | 80 | 130 | 310 | 130 | 145 |
| Dynamic Tensile Modulus (Pa) | | $2.11 \times 10^7$ | $8.82 \times 10^6$ | $4.11 \times 10^6$ | $5.37 \times 10^6$ | $9.32 \times 10^6$ | $1.27 \times 10^8$ |
| Dynamic Shear Modulus (Pa) | | $2.04 \times 10^5$ | $9.01 \times 10^5$ | $2.00 \times 10^5$ | $4.81 \times 10^5$ | $8.51 \times 10^5$ | $2.89 \times 10^5$ |

[Table 7]

| | | Comparative Example | | | | |
|---|---|---|---|---|---|---|
| | | 1 | 2 | 3 | 4 | 5 |
| Viscosity (cps) | | 30000 | 30000 | 420000 | 65 | 35000 |
| Compressive Shear Bond Strength (kgf/cm$^2$) | Before Irradiation | <0.01 | <0.01 | <0.01 | <0.01 | <0.01 |
| | Imm. After Irradiation | <0.01 | <0.01 | <0.01 | *) | <0.01 |
| | 24 Hrs. After Irradiation | <0.01 | 0.14 | 38 | *) | 0.31 |
| | 7 Days After Irradiation | <0.01 | 3 | 17 | *) | 13 |
| Shear Creep | Imm. After Irradiation | Fell | Fell | Fell | Fell | Fell |
| | 10 Min. After Irradiation | Fell | Fell | Fell | Fell | Fell |

(continued)

| | | Comparative Example | | | | |
|---|---|---|---|---|---|---|
| | | 1 | 2 | 3 | 4 | 5 |
| Pot Life (hrs.) | | > 12 | > 12 | > 12 | > 12 | > 12 |
| Initial 90° Peel Creep (g) | | < 100 | < 100 | < 100 | < 100 | < 100 |
| Conversion (%) | Imm. After Irradiation | 0 | 0 | 0 | >95 | 18 |
| | 12 Hrs. After Irradiation | 0 | 12 | 12 | > 95 | 28 |
| | 24 Hrs. After Irradiation | 0 | 40 | 40 | >95 | 45 |
| Elongation at Break (%) | | Immeasurable | 280 | 35 | 2 | 170 |
| Dynamic Tensile Modulus (Pa) | | Immeasurable | $5.50 \times 10^5$ | $6.40 \times 10^5$ | $4.40 \times 10^5$ | $5.40 \times 10^6$ |
| ∗)Failed to combine | | | | | | |

As demonstrated in Tables 4 - 6, the adhesive compositions of Examples 5 - 14 exhibit suitably spreadable viscosity, increased adhesive strength and improved cohesion immediately after exposure to a radiation, extended pot life, and sufficient build-up of adhesive strength 7 days after exposure to a radiation.

As can be seen from Tables 4 and 7, the adhesive compositions of Comparative Examples 1, 2, 4 - 6, because of their exclusion of a thixotropic agent (E), and the adhesive composition of Comparative Example 3, because of its exclusion of both the compound (C) having a polymerizable group in a molecule and the compound (D) which is activated when exposed to a radiation to initiate polymerization of a polymerizable groups in the compound (C), exhibit inferior adhesive strength immediately after exposure to a radiation.

**EFFECTS OF THE INVENTION**

The adhesive composition in accordance with the reference aspect of the invention, prior to exposure to an active energy radiation, i.e., initially exhibits a sufficient flowability to permit easy application thereof on an adherend by hands or by a spreader. When it is exposed to an active energy radiation, the compound (Y) therein is allowed to decompose rapidly and the compound (X) is allowed to crosslink or polymerize. In this instance, because a part of the compound (X) is left unreacted within a normal spreadable time, the adhesive composition can afford to develop a suitable level of cohesion commensurate with a residual content of the compound (X) and exhibits a degree of tack that eliminates the need of temporary fixing. After termination of exposure to an active energy radiation, the polymerization and cross-linking are allowed to go proceed in the form of a dark reaction. Accordingly, curing is allowed to proceed in a rapid fashion.

As such, the reference aspect of the invention can provide an adhesive composition which exhibits good storage stability, curing characteristics and working properties. Also, the adhesive composition after cure exhibits the superior resistance to impact and creep.

The adhesive composition in accordance with the invention contains a component that cures in the presence of moisture in the air, a component that develops cohesion by short-time exposure to a radiation, and a thixotropic agent. Accordingly, this adhesive composition is flowable at ordinary state, shows a spreadable viscosity and a long pot life, develops cohesion by short-time exposure to a radiation, eliminates the need of temporary bonding or fixing, suits to a joining process on line, and exhibits superior physical properties, such as impact resistance and creep resistance, after it is applied and then cured.

**Claims**

1.   An adhesive composition **characterized** as containing:

(A) 100 parts by weight of a compound having at least two hydrolyzable silyl groups in a molecule;
(B) 0.01-20 parts by weight of a compound which initiates crosslinking of the compound (A);
(C) 15-100 parts by weight of a compound having a polymerizable group in a molecule;

(D) 0.01-20 parts by weight of a compound which is activated by irradiation to initiate polymerization of the polymerizable group in the compound (C); and
(E) 20-65% by volume at 25°C. based on 100% by volume of all compounds (A)-(E), of a thixotropic agent

wherein:

said adhesive composition has a viscosity at 25°C of 1-10,000,000 mPa·s (1-10,000,000 cps), conversions of the compounds (A) and (C) immediately after exposure of the adhesive composition to an active energy radiation of ultraviolet radiation, visible light, infrared ray, electron beam or X-ray are in the range of 10-70%, the composition immediately after its exposure to the active energy radiation has a dynamic shear modulus in the range of $10^5$-$10^7$ Pa; and
the conversions of the compounds (A) and (C) after exposure of the adhesive composition to the active energy radiation and subsequent 24-hour aging af 25°C are in the range of 50-100%, and after exposure of the adhesive composition to the active energy radiation and subsequent 24-hour aging at 25°C, the cured composition has an elongation at break of 10-1,000% and a dynamic tensile modulus in the range of $10^5$-$10^9$ Pa.

2. The adhesive composition as recited in claim 1, **characterized in that** the conversions of the compounds (A) and (C) immediately after exposure of the adhesive composition to an active energy radiation are in the range of 10 - 70 % and the adhesive composition has a viscosity at 25 °C of 1-10,000,000 mPa·s (1-10,000,000 cps); and

the conversions of the compounds (A) and (C) after exposure of the adhesive composition to the active energy radiation and subsequent 12-hour aging at 25 °C are in the range of 50 - 100 %.

3. The adhesive composition as recited in claim 1 or 2, **characterized in that** the hydrolyzable silyl group in the compound (A) is a alkoxysilyl group, and the compound (A) is a compound containing the alkoxysilyl group substituted in a polymer selected from polyalkylene glycols and polyolefins.

4. The adhesive composition as recited in any one of claims 1, 2 and 3, **characterized in that** the polymerizable group in the compound (C) is a free-radically polymerizable group and the compound (D) is a photochemically free-radical generating agent.

5. The adhesive composition as recited in any one of claims 1, 2. 3 and 4, **characterized in that** the free-radically polymerizable group in the compound (C) is a polymerizable group selected from acryloyl and methacryloyl groups.

6. The adhesive composition as recited in any one of claims 1, 2, 3, 4 and 5, **characterized in that** the compound (C) contains at least one type of compound (F) containing at least one polymerizable group in a molecule and having a weight average molecular weight of not less than 3,000.

7. A method of joining members **characterized** as comprising, in sequence, applying the adhesive composition as recited in any one of claims 1, 2 and 3-6 to one of the members, exposing a top surface of the applied adhesive composition layer to an active energy radiation and combining the one member with the other member.

**Patentansprüche**

1. Klebstoffzusammensetzung, **dadurch gekennzeichnet, dass** sie enthält:

(A) 100 Gewichtsteile einer Verbindung mit mindestens zwei hydrolysierbaren Silylgruppen in einem Molekül;
(B) 0,01-20 Gewichtsteile einer Verbindung, welche die Vernetzung der Verbindung (A) initiiert;
(C) 15-100 Gewichtsteile einer Verbindung mit einer polymerisierbaren Gruppe in einem Molekül;
(D) 0,01-20 Gewichtsteile einer Verbindung, welche durch Bestrahlung aktiviert wird, um die Polymerisation der polymerisierbaren Gruppe in der Verbindung (C) zu initiieren; und
(E) 20-65 Vol-% bei 25°C, basierend auf 100 Vol.-% sämtlicher Verbindungen (A)-(E), eines thixotropen Mittels,

wobei:

die Klebstoffzusammensetzung bei 25°C eine Viskosität von 1-10.000.000 mPa·s (1-10.000.000 cps) besitzt, Umwandlungen der Verbindungen (A) und (C) unmittelbar nach Aussetzung der Klebstoffzusammensetzung einer aktiven Energiebestrahlung aus ultravioletter Strahlung, sichtbarem Licht, Infrarotstrahlung, Elektronenstrahl oder Röntgenstrahl im Bereich von 10-70% liegen, die Zusammensetzung unmittelbar nach ihrer Aussetzung gegenüber der aktiven Energiebestrahlung einen dynamischen Schermodul im Bereich von $10^5$-$10^7$ Pa besitzt; und

die Umwandlungen der Verbindungen (A) und (C) nach Aussetzung der Klebstoffzusammensetzung der aktiven Energiebestrahlung und im Anschluss an eine 24stündige Alterung bei 25°C im Bereich von 50-100% liegen, und nach Aussetzung der Klebstoffzusammensetzung gegenüber der aktiven Energiebestrahlung und im Anschluss an eine 24stündige Alterung bei 25°C die gehärtete Zusammensetzung eine Bruchdehnung von 10-1.000% und einen dynamischen Zugmodul im Bereich von $10^5$-$10^9$ Pa besitzt.

2. Klebstoffzusammensetzung nach Anspruch 1, **dadurch gekennzeichnet, dass** die Umwandlungen der Verbindungen (A) und (C) unmittelbar nach Aussetzung der Klebstoffzusammensetzung einer aktiven Energiebestrahlung im Bereich von 10 - 70% liegen und die Klebstoffzusammensetzung bei 25°C eine Viskosität von 1-10.000.000 mPa·s (1-10.000.000 cps) besitzt; und

die Umwandlungen der Verbindungen (A) und (C) nach Aussetzung der Klebstoffzusammensetzung der aktiven Energiebestrahlung und nachfolgender 12stündiger Alterung bei 25°C im Bereich von 50 - 100% liegen.

3. Klebstoffzusammensetzung nach Anspruch 1 oder 2, **dadurch gekennzeichnet, dass** die hydrolysierbare Silylgruppe in der Verbindung (A) eine Alkoxysilylgruppe ist, und die Verbindung (A) eine Verbindung ist, enthaltend die Alkoxysilylgruppe substituiert in einem Polymer, gewählt aus Polyalkylenglykolen und Polyolefinen.

4. Klebstoffzusammensetzung nach mindestens einem der Ansprüche 1, 2 und 3, **dadurch gekennzeichnet, dass** die polymerisierbare Gruppe in der Verbindung (C) eine durch freie Radikale polymerisierbare Gruppe ist und die Verbindung (D) ein photochemisch freie Radikale erzeugendes Mittel ist.

5. Klebstoffzusammensetzung nach mindestens einem der Ansprüche 1, 2, 3 und 4, **dadurch gekennzeichnet, dass** die durch freie Radikale polymerisierbare Gruppe in der Verbindung (C) eine polymerisierbare Gruppe ist, gewählt aus Acryloyl- und Methacryloylgruppen.

6. Klebstoffzusammensetzung nach mindestens einem der Ansprüche 1, 2, 3, 4 und 5, **dadurch gekennzeichnet, dass** die Verbindung (C) mindestens einen Typ einer Verbindung (F) enthält, enthaltend mindestens eine polymerisierbare Gruppe in einem Molekül und welche ein gewichtsmittleres Molekulargewicht von nicht weniger als 3.000 besitzt.

7. Verfahren zum Verbinden von Elementen, **dadurch gekennzeichnet, dass** es aufeinanderfolgend umfasst das Aufbringen der Klebstoffzusammensetzung gemäß mindestens einem der Ansprüche 1, 2 und 3-6 auf eines der Elemente, Aussetzen der äußeren Oberfläche der aufgebrachten Schicht der Klebstoffzusammensetzung einer aktiven Energiebestrahlung und Kombinieren des einen Elements mit dem anderen Element.

**Revendications**

1. Composition d'adhésif **caractérisée en ce qu'**elle contient :

(A) 100 parties en poids d'un composé ayant au moins deux groupes silyles hydrolysables par molécule ;
(B) 0,01 à 20 parties en poids d'un composé qui initie la réticulation du composé (A) ;
(C) 15 à 100 parties en poids d'un composé ayant un groupe polymérisable par molécule ;
(D) 0,01 à 20 parties en poids d'un composé qui est activé par irradiation pour initier la polymérisation du groupe polymérisable du composé (C) ; et
(E) 20 à 65% en volume de 25°C basé sur 100% en volume de tous les composés (A) - (E), d'un agent thixotropique

dans laquelle :

- ladite composition d'adhésif a une viscosité à 25°C de 1 à 10.000.000 mPa.s (1-10.000.000 cps), les conversions des composés (A) et (B) immédiatement après exposition de la composition d'adhésif à un rayonnement énergétique actif d'un rayonnement ultraviolet, de lumière visible, d'un rayonnement infrarouge, d'un faisceau d'électrons ou de rayons X sont comprises entre 10 et 70 %, la composition immédiatement après son exposition au rayonnement énergétique actif a un module de cisaillement dynamique compris entre $10^5$ - $10^7$ Pa ; et

- les conversions des composés (A) et (C) après exposition de la composition d'adhésif au rayonnement énergétique actif et vieillissement subséquent de 24 heures à 25°C sont comprises entre 50 et 100% et après exposition de la composition d'adhésif au rayonnement énergétique actif et vieillissement subséquent de 24 heures à 25°C, la composition durcie a une élongation à la rupture de 10 à 1000% et un module de tension dynamique compris entre $10^5$ et $10^9$ Pa.

2. Composition d'adhésif selon la revendication 1, **caractérisée en ce que** les conversions des composés (A) et (C) immédiatement après exposition de la composition d'adhésif à un rayonnement énergétique actif sont comprises entre 10 et 70% et la composition d'adhésif a une viscosité à 25°C de 1 à 10.000.000 mPa.s (1 à 10.000.000 cps) ; et les conversions des composés (A) et (C) après exposition au rayonnement énergétique actif et vieillissement subséquent de 12 heures à 25°C sont comprises entre 50 et 100%.

3. Composition d'adhésif selon la revendication 1 ou 2, **caractérisée en ce que** le groupe silyle hydrolysable dans le composé (A) est un groupe alkoxysilyle et le composé (A) est un composé contenant le groupe alkoxysilyle substitué dans un polymère choisi parmi les polyalkylènes glycols et les polyoléfines.

4. Composition d'adhésif selon l'une quelconque des revendications 1, 2 et 3, **caractérisée en ce que** le groupe polymérisable dans le composé (C) est un groupe polymérisable à radical libre et le composé (D) est un agent générant photochimiquement des radicaux libres.

5. Composition d'adhésif selon l'une quelconque des revendications 1, 2, 3 et 4, **caractérisée en ce que** le groupe polymérisable à radical libre dans le composé (C) est un groupe polymérisable choisi parmi les groupes acryloyle et méthacryloyle.

6. Composition d'adhésif selon l'une quelconque des revendications 1, 2, 3, 4 et 5, **caractérisée en ce que** le composé (C) contient au moins un type de composé (F) contenant au moins un groupe polymérisable par molécule et ayant un poids moléculaire moyen non inférieur à 3 000.

7. Procédé pour lier des éléments **caractérisé en ce qu'**il comprend successivement l'application de la composition selon l'une des revendications 1, 2 et 3 à 6 à l'un des éléments, l'exposition de la surface supérieure de la couche de composition d'adhésif appliquée à un rayonnement énergétique actif et la combinaison de l'un des éléments avec l'autre élément.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 56067366 A
- JP 63139969 A
- JP 55036241 A
- JP 8325466 A
- JP 6080825 A
- JP 6228248 A
- JP 9137137 A
- JP 3160053 A